# EUROPEAN PATENT SPECIFICATION

(11) **EP 1 787 856 B1**
(45) Date of publication and mention of the grant of the patent: **11.04.2012**
(21) Application number: 05111033.6
(22) Date of filing: 21.11.2005
(51) Int. Cl.: B60N 2/30, B60N 2/44, B60N 3/00, B60R 5/00, B60R 7/04

(54) **Storage device**
Aufbewahrungsvorrichtung
Dispositif de stockage

(43) Date of publication of application: 23.05.2007
(73) Proprietor: Volvo Car Corporation, 405 31 Göteborg (SE)
(72) Inventor: Mattsdotter, Anna, 436 44, Askim (SE); Kollberg, Charlotta, 414 59, Göteborg (SE)
(74) Representative: Romare, Laila Anette

(56) References cited:
- EP-A- 0 773 134
- EP-A- 0 899 158
- DE-A1- 3 400 143
- DE-A1- 3 419 758
- DE-A1- 3 729 837
- US-B1- 6 547 323

## Description

### TECHNICAL FIELD

The invention relates to a stowable storage module for a vehicle, which unit is movable from a stowed position to an active position.

### BACKGROUND ART

There is an increasing customer demand for storage volume for personal belongings, such as purses, bags, toys, cellular phones, books, CDs, etc. This demand must be weighed against the manufacturer's requirements for packaging volumes for vehicle components. Both types of items need to be stored in a collision safe way. The items also need to be stored in a secure way to avoid theft. The items used for various activities in the rear seat should not be possible to observe from the outside of the vehicle. In the rear seat, passengers involved in different activities, where for instance one is playing games while another is resting, both should be offered the possibility to do this.

Many modern vehicles are provided with various storage compartments, such as an armrest storage facility, or compartments and pockets at the rear of the front seats and in the rear passenger doors or similar. This multitude of pockets and compartments will often result in personal effects and other items being distributed around the rear passenger compartment in a highly disorganized way. In addition, the available storage spaces provided are often not the right size or are not_provided in sufficient numbers for the items to be stored. An example of a typical storage compartment that is pivoted out of a seat back to double as an armrest is shown in US 6 547 323.

DE 37 29 837 discloses a storage compartment which is part of the back rest, wherein a seat back can be pulled forward to provide additional storage space within the passenger compartment. A problem with this solution is that the contents are inaccessibly to the passengers.

EP 0 899 158 discloses an alternative storage compartment where a seat back can be pulled forward to provide additional storage space. Although the contents are accessibly from the passenger compartment, the storage space takes up the entire back seat.

The object of the invention is to provide the customer with a larger and more flexible storage facility than what is commonly available today, such as armrest storage compartments. The invention will allow valuable items to be stored in a secure way to avoid theft, as the items may not be observed from the outside of the vehicle.

### DISCLOSURE OF INVENTION

The invention relates to a stowable storage module for a vehicle, according to claim 1 and its dependent claims.

The invention relates to a stowable storage module for a vehicle, which storage module has a front section comprising a section of a backrest of a row of passenger seats having at least two individual seats and that the storage module is arranged to be slidable in a substantially longitudinal direction of the vehicle, from a stowed position where the storage module is located substantially behind said backrest into at least one active position where the storage module is extending out of the backrest at least partially over a seat cushion adjacent at least one passenger seat.

The front section of the storage module may be located in the backrest of one or both of two rear seats for a vehicle having only two rear seats. Alternatively, the passenger seat has a row of three individual passenger seats, where a front section of the storage module forms a part of a central passenger seat

The storage module of the invention is provided with at least one closure or opening on at least one side surface, allowing access to the storage module from at least one side of said unit when the unit is partially or fully extended. Each closure may be hinged, slidable, in the form of a roller blind or some other suitable type of closure. The closures may also be provided with latches or locks to prevent them from opening when the unit is being handled. For extra safety, the storage module may be reinforced and provided with one or more secure locking devices to prevent theft. The unit may have a single closure that can be opened when the storage module is partially or fully extended, depending on the location and type of closure. Alternatively, the unit may be provided with multiple closures, where one or more closures may be accessed in sequence as the unit is extended. The one or more closures may be located on one or both sides of the storage module. In addition one or more covers or lids for additional storage compartments may be provided at the top of the module. Finally, the front section may be folded down to reveal storage spaces, cup-holder or similar.

According to the invention at least one closure on a side surface facing an adjacent seat is convertible to a substantially horizontal support surface. The horizontal support surface may extend in a lateral direction of the vehicle, spaced from both the seat cushion and the backrest of an adjacent passenger seat to form a table or a cup-holder. A work surface or table may be created by folding and/or lifting and folding a closure or a section thereof from a substantially vertical position to a substantially horizontal position over the lap of a passenger. Such a movement may be guided by supporting arms and/or linkages attached to a supporting frame of the storage module. Cup holders of this type are known per se and will not be described in further detail here. The storage module may also be provided with at least one closure on its upper surface, allowing access to the storage module from above.

The storage module may also be provided with at least one sub-module, where each sub-module is accessible through an adjacent closure. I n a vehicle having two rear seats, the unit will only require closures of this type on that side facing the neighbouring seat. Each closure may be associated with a single or multiple sub-modules, which sub-modules may be mutually re-arranged by the passenger, if desired. One or more sub-modules may be removable from the storage module, wherein a sub-module containing items such as CDs or similar may be removed from the vehicle to another location. The storage module also provides an opportunity to individualize the storage for different needs. The storage modules may be held in place by tracks on a rear or side wall or on shelves in the module, or be attached by clamps, clips, cooperating sockets, Velcro™ or similar suitable means. This type of storage will offer the passenger the possibility to pack the removable sub-module with personal belongings at home, bring it to the vehicle and place it in a designated position in the storage module.

The storage module is provided with at least two sub-modules located side-by-side, where each sub-module is accessible from opposite sides of said unit. This alternative may be used for a vehicle with a row of three seats, where a passenger may be seated on either side of the storage module. Such a unit may of course be provided with all the above-mentioned features.

A storage module located between two seats may be provided with at central dividing partition which is extendable from the upper surface thereof, in a substantially vertical direction when said unit is partially or fully extended. The partition may extend along a part of or the entire length of the extended section of the upper section of the storage module. This allows the passengers more privacy and allows for individual activities that may otherwise disturb the other passenger. For parents travelling with children, the solution also offers the possibility to divide the rear seat into two separate areas for example one child can sleep while the other is playing games.

The shape of the storage module may be chosen depending on its desired function or with respect to available space in front of and behind the rear seat. The length may be chosen depending on the desired length of extension, as described above. The cross-section in a plane parallel to the backrest may be substantially rectangular, semi-circular or a combination of these and other suitable shapes.

The storage module may be moved by sliding it along rails or guides mounted in a compartment to the rear of the backrest in which it is located. If the unit is extended to the front edge of the seat cushion, or into a position between the seats in front of the rear seat, then rails or guides of the telescopic type or similar may be used. The storage module may be locked in at least two positions, including a fully stowed position, a fully extended position, and one or more intermediate positions if desired. Means for securing the front end of the storage module to the vehicle floor in front of the seat cushion or between the front seats may also be provided.

As stated above, the storage module is located in a compartment behind the backrest, for instance in a luggage compartment, in its stowed position. If desired, the storage module may also be accessible from the luggage compartment while in its stowed position.

The storage module may also be used for adapting the rear luggage compartment of the vehicle for different customer demands. The luggage compartment is used for many different types of luggage, such as suitcases, sports equipment and food bags. The storage module may be used as a separator between the different items, or alternatively be used for organizing them in an ordered way. For instance, if the sub-modules as described above have been removed, the supporting frame of the storage module may be used for holding or supporting various items placed in or strapped to the storage module and/or the luggage compartment. Alternatively, an outer frame may be provided surrounding the storage unit, which outer frame may be provided with attachment or supporting means for luggage, bags or other items.

In operation, the stowed position the storage module will separate the luggage area but still provide space in the rearmost luggage area and allow access to any under floor storage units. When the storage module is in the stowed position passengers may occupy all the rear seats. Hence, if a passenger is seated in front of the storage module he/she has to move before the storage module can be deployed into its extended position. In the extended position the storage module will separate a rear row of three seats in two areas, wherein only two persons can travel in the rear seats. The storage module may then operate as a divider between the passengers so that interference between the two can be avoided. When not in use the storage module can slide into luggage position to hide the storage module from casual observers outside the car. The storage module may be detached and removed from both luggage and compartment position, which can be an advantage if more space is needed for luggage or if the rear row of seats must be folded away to accommodate relatively large items. Access to the storage module may be provided through the rear luggage compartment as well as from the rear seat.

The storage module may come in different versions. An office storage module may contain all kinds of office equipment and may provide a foldable desk for a lap top, a fax, a printer or other electronic devices, such as audio, audiovisual or multimedia equipment. A childrens storage module is for eating and drinking so this storage module has foldable food tray adapted for this purpose and a cup holder. Such a storage module can also work as a separator to prevent children from teasing each other. It will also provide storage for a multitude of items, such as toys, games, cards, crayons and paper for drawing. The children may also be provided with individually controllable headphones for listening to various audio sources or using a multimedia unit for playing games, watching DVDs or for accessing internet. A common socket or separate sockets may be provided for connecting them to a games console, a CD/DVD player and/or a radio and allowing them to choose a suitable channel. The storage module can be totally symmetrical on both sides or may be provided with an office storage module on one side and a childrens storage module on the other. Other types of modules for general or specific purposes may also be provided.

The storage module may be electrically or hydraulically controlled from the front or the rear seat, for comfort or if the unit contains relatively heavy equipment. Also, if children seated in the rear seats are unable to keep quiet, the parents may simply slide the storage module between them by the touch of a button.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figures 1A-B: show a schematic illustration of a storage module;
- Figures 2A-C: show a schematic illustration of another storage module;
- Figure 3: shows a front view of a storage module according to the invention of the type indicated in Figure 1B;
- Figure 4: shows a schematic illustration of a storage module according to a another embodiment of the invention; and
- Figure 5: shows an alternative view of the storage module indicated in Figure 4.

### EMBODIMENTS OF THE INVENTION

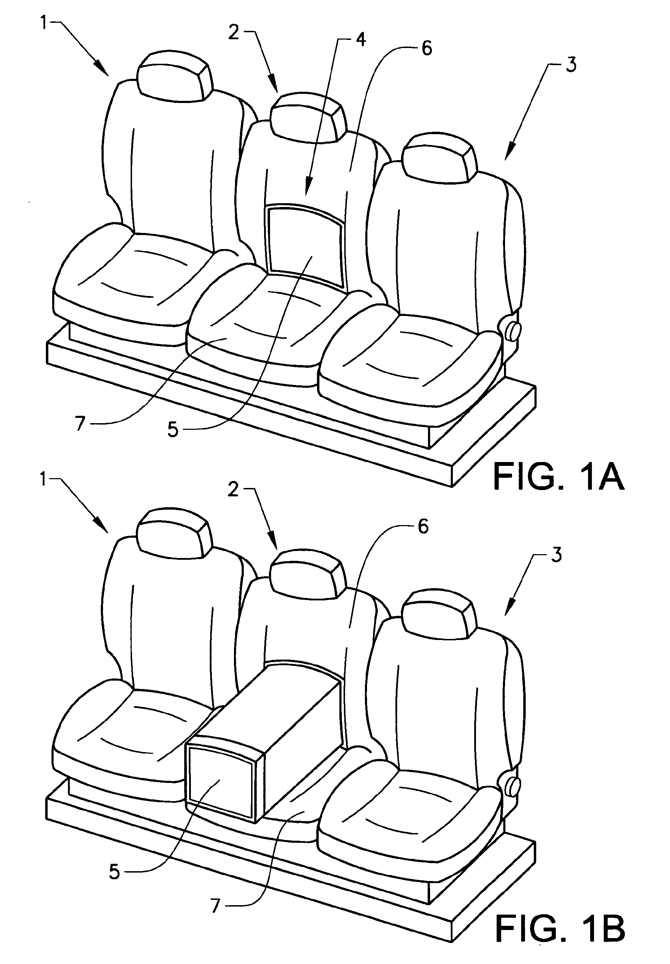

Figures 1A and 1B show a schematic illustration of a storage module. In this a vehicle having a rear passenger seat comprising a row of three seats 1, 2, 3, is provided with a storage module 4 located in a central passenger seat 2. A front section 5 of the storage module 4 forms a part of the back rest 6 of the central passenger seat 2. Figure 1A shows the storage module 4 in its stowed position, where only the front section 5 visible. The front section 5 is padded to form an integral part of the back rest 6 when the module is stowed. Figure 1B shows the storage module 4 in its extended position, where the storage module 4 is extended out from the back rest 6 over a seat cushion 7 of the central seat 2. In this position the storage module 4 is accessible from the either of the outer rear seats 1, 3. The storage module 4 is arranged to have a maximum extension into a position up to or a short distance beyond the front edge of the central seat cushion 7 between the outer seats 1, 3 of the rear row of seats.

In the case of a vehicle having a row of seats with only two seats, the storage module can be arranged substantially as shown in Figure 1A-B. Obviously, the central rear seat would be removed and the storage module can be extended or deployed over the space between the seats. Alternatively, the storage module can be arranged to extend from the backrest of one or both of the adjacent seats.

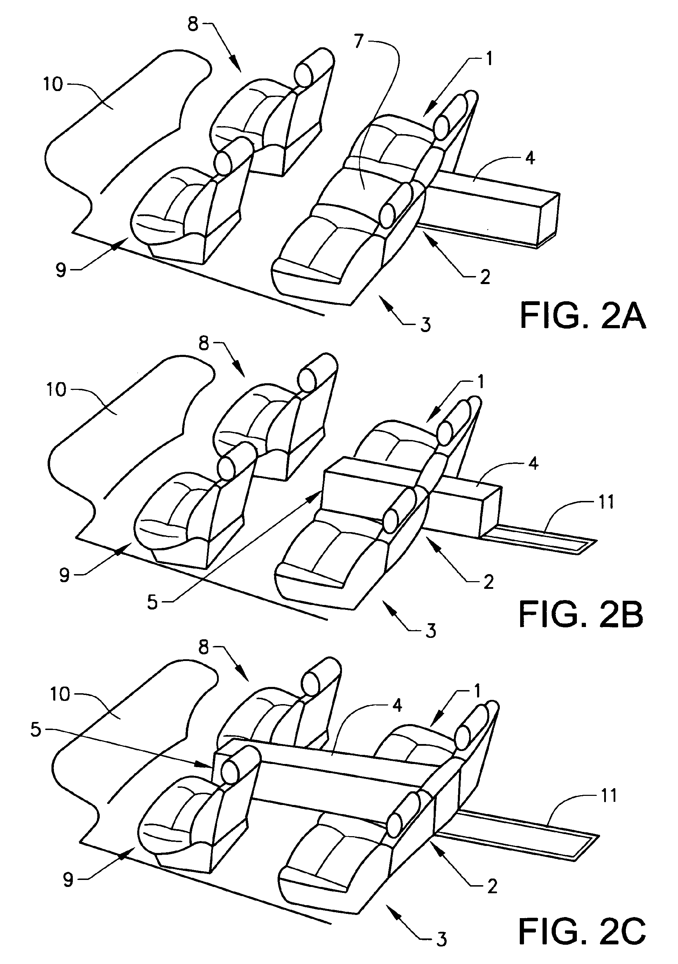

Figures 2A, 2B and 2C show a schematic illustration of another storage module. Figure 2A shows a perspective view of a passenger compartment for a 5-seat passenger vehicle. Similar to Figure 1A, the rear passenger seat comprises a row of three seats 1, 2, 3, is provided with a storage module 4 located in a central passenger seat 2. In addition, a first and a second front seat 8, 9 are located in front of the row of rear seats 1, 2, 3 and behind a schematically indicated dashboard 10.

Figure 2B shows the storage module 4 extended along a guide rail 11 attached to a floor surface in a luggage compartment (not shown), from its stowed position into a first position between the outer seats 1, 3 in the row of rear seats 1, 2, 3. This position substantially corresponds to the position of the storage module 4 as described in Figure 1B above.

Figure 2C shows the storage module 4 extended to its full length into the passenger compartment. In this second position, the storage module 4 is located with its front section 5 between the front seats 8, 9. In this position selected parts of the storage module is accessible from the front seats 8, 9.

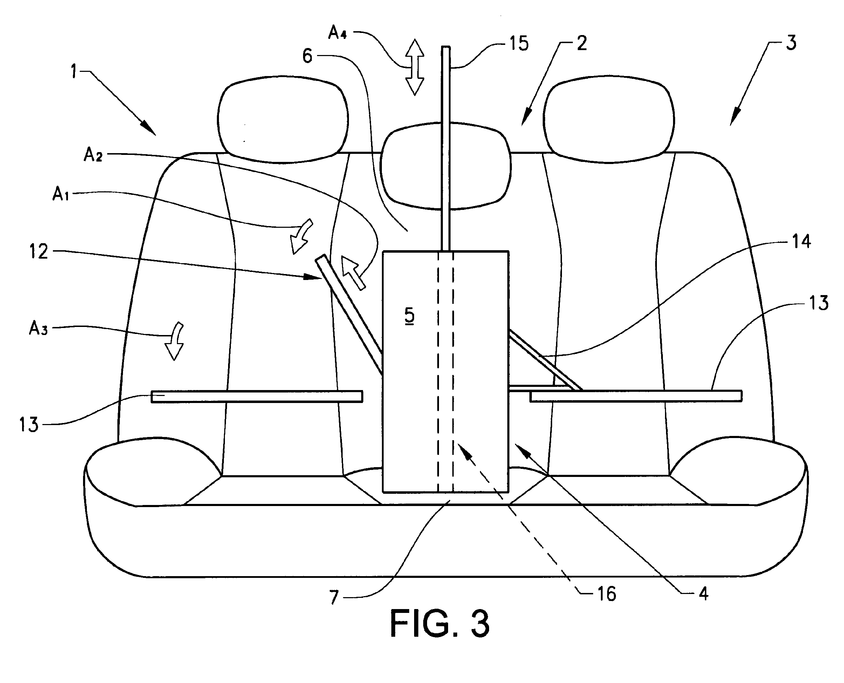

Figure 3 shows a front view of a storage module of the type indicated in Figure 1B, in which the module is extended between the outer seats 1, 3 in row of rear seats 1, 2, 3. According to this embodiment of the invention, a closure 12 provided on a side surface of the module 4 facing an adjacent seat 1, 3 is convertible into a substantially horizontal support surface, or a table 13. The table 13 extends in a lateral direction of the vehicle, spaced from both the seat cushion and the backrest of the adjacent passenger seat 1. The table 13 can be provided with recesses for one or more plates, a cup-holder, etc. Figure 3 indicates an example where the work surface or table 13 is created by first opening the closure 12 by folding it outwards around a linkage in a direction indicated by the arrow A₁. Once opened, the closure 12 is lifted upwards in the direction of the arrow A₂ and folded downwards in the direction of the arrow A₃ to a substantially horizontal position over the lap of a passenger. Such a movement may be guided by supporting arms and/or linkages attached to a supporting frame of the storage module. The right hand side of Figure 3 shows a table 13 in its folded down position and held in place by a linkage 14. Linkages of this type are generally known and are not part of the claimed invention. Any suitable type of linkage may be used for the above purpose. Similarly, integrated or separately mounted cup holders for vehicles are known per se and will not be described in further detail here.

The storage module 4 shown in Figure 3 is also provided with a central dividing partition 15. The partition 15 is stored in a gap between two sheets of material forming a central and longitudinal dividing wall 16 extending through the storage module 4. The partition 15 is extendable up through the upper surface of the storage module 4 in a substantially vertical direction, as indicated by the arrow A₄, when said module is fully extended. In this embodiment the partition extends along the entire length of the extended section of the upper section of the storage module 4.

Extension of the partition 15 can be performed manually or automatically actuated by any suitable controlling means, such as a switch or a button. An automatically actuated partition is driven by an electric or hydraulic motor (not shown) which can be controlled from either the front or the rear seats. The controlling means can have means for deactivating the rear switches in the same way as used for rear windows.

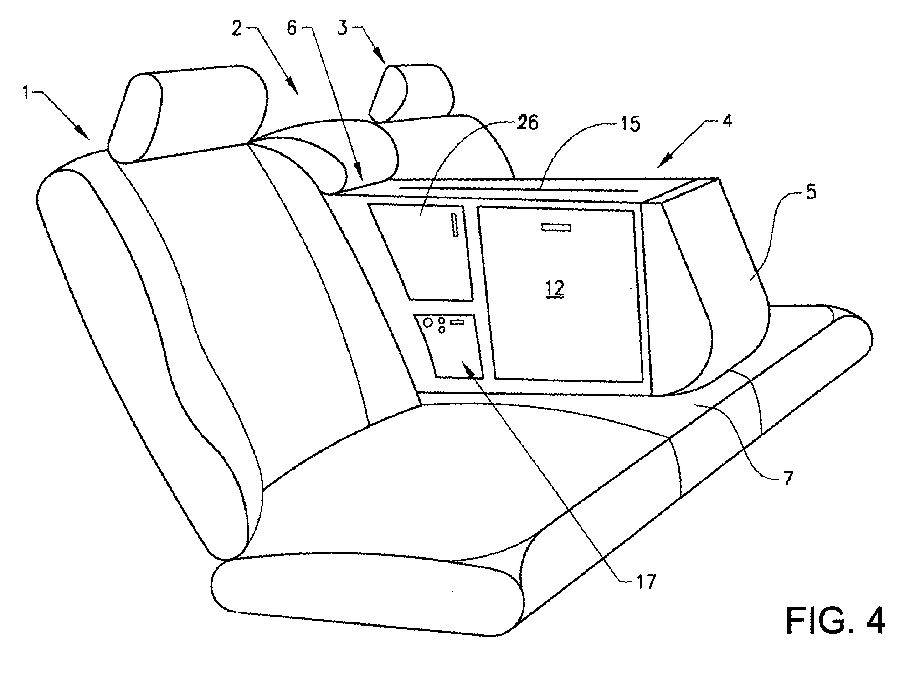

Figure 4 shows a perspective side view of a storage unit according to the invention. This figure shows the storage module 4 in its extended position, where the storage module 4 is extended out from the back rest 6 over a seat cushion 7 of the central seat 2. In this position the storage module 4 exposes a number of closures 12, 26 accessible from the side of the storage module 4 as well as an electrical unit 17 with jacks/sockets for electronic accessories.

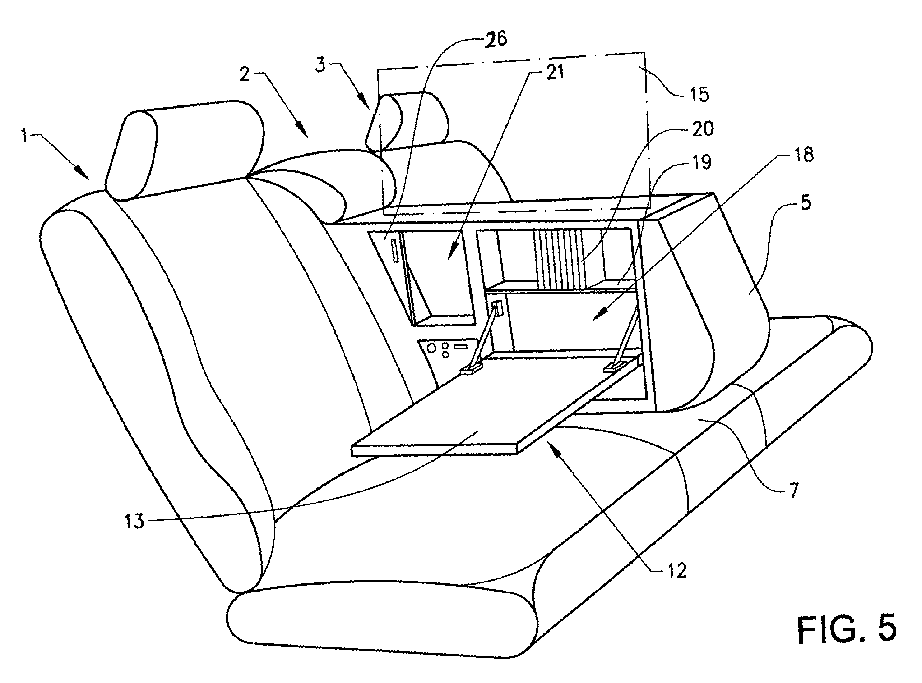

Figure 5 shows the storage unit 4 of Figure 4, wherein a closure 12 has been converted into a table 13. A main storage compartment 18 is located behind the closure 12 and comprises a system of shelves 19, wherein the passenger can store removable containers 20 for CDs, DVDs and/or personal effects. A second storage compartment 21 is located to the rear of the main storage compartment 18, behind a sliding door 26. Located below the second storage compartment 21 there is an electrical unit 17 comprising a 12 Volt outlet and a number of jacks and sockets for various electronic accessories. In this embodiment, such accessories can include audio, audiovisual or multimedia equipment. An alternative embodiment intended for office use may instead or additionally be provided with connectors or sockets for a computer, a fax machine, a printer or similar devices. Figure 5 also indicates the location of the dividing partition 15 in its raised position. The type and arrangement of doors and closures for use in the storage module is not in any way limited to the example shown in Figures 4 and 5.

The invention is not limited to the above embodiments, but may be varied freely within the scope of the claims.

## Claims

1. Stowable storage module (4) for a vehicle, which storage module (4) has a front section (5) comprising a section of a backrest (6) of one of a row of passenger seats (1, 2, 3) having at least two individual seats, that the storage module (4) is arranged to be slidable in a longitudinal direction of the vehicle, from a stowed position where the storage module (4) is located substantially behind said backrest (6) into at least one active position, where the storage module (4) is extending out of the backrest (6) at least partially over a seat cushion (7) adjacent at least one passenger seat (1, 2, 3), **characterized** i n that the storage module (4) is provided with at least one closure (12, 16) on at least one side surface facing an adjacent seat (1, 3), allowing access to the storage module (4) from at least one side of said storage module (4), and that at least one closure (12) on a side surface is convertible to a substantially horizontal support surface (13).

2. Stowable storage module (4) according to claim 1, **characterized in that** the row of passenger seats (1, 2, 3) has three individual seats, where the front section (5) of the storage module (4) forms a part of a central passenger seat (2).

3. Stowable storage module (4) according to claim 1, **characterized in that** the horizontal support surface (13) extends in a lateral direction spaced from both a seat cushion and a backrest of an adjacent passenger seat (1, 3) to form a table.

4. Stowable storage module (4) according to claim 1, **characterized in that** the storage module (4) is provided with at least one closure on its upper surface, allowing access to the storage module (4) from above.

5. Stowable storage module (4) according to claim 1, **characterized in that** the storage module (4) is provided with a central dividing partition (15) which is extendable in a substantially vertical direction when said storage module (4) is in its active position.

6. Stowable storage module (4) according to claim 1, **characterized in that** the storage module (4) has a substantially rectangular cross-section in a plane parallel to the backrest (6).

7. Stowable storage module (4) according to claim 1, **characterized in that** the storage module (4) has a substantially semi-circular cross-section in a plane parallel to the backrest (6).

8. Stowable storage module (4) according to claim 1, **characterized in that** the storage module (4) can be locked in at least two positions, including a fully stowed position and a fully extended position.

9. Stowable storage module (4) according to claim 8, **characterized in that** the storage module (4) extends over substantially the entire length of the seat cushion (7) when in its fully extended position.

10. Stowable storage module (4) according to claim 8, **characterized in that** the storage module (4) extends between a pair of seats (8, 9) located in front of the row of passenger seats (1, 2, 3) when in its fully extended position.

11. Stowable storage module (4) according to claim 1, **characterized in that** the storage module (4) is located in a luggage compartment in its stowed position.

12. Stowable storage module (4) according to claim 9, **characterized in that** the storage module (4) is accessible from the luggage compartment while in its stowed position.

## Patentansprüche

1. Verstaubares Aufbewahrungsmodul (4) für ein Fahrzeug, welches verstaubare Aufbewahrungsmodul (4) einen Vorderabschnitt (5) aufweist, der einen Abschnitt einer Rückenlehne (6) eines Sitzes in einer Reihe von Beifahrersitzen (1, 2, 3) mit mindestens zwei einzelnen Sitzen umfasst, dass das Aufbewahrungsmodul (4) eingerichtet ist, um in eine Längsrichtung des Fahrzeugs verschiebbar zu sein, von einer verstauten Position, wo das Aufbewahrungsmodul (4) im Wesentlichen hinter der Rückenlehne (6) angeordnet ist, in mindestens eine aktive Position, wo sich das Aufbewahrungsmodul (4) aus der Rückenlehne (6) heraus und mindestens teilweise über einem Sitzpolster (7) neben mindestens einem Beifahrersitz (1, 2, 3) erstreckt, **dadurch gekennzeichnet, dass** das Aufbewahrungsmodul (4) mit mindestens einem Verschluss (12, 16) in mindestens einer Seitenfläche, die dem benachbarten Sitz (1, 3) zugewandt ist, versehen ist, wodurch Zugang zum Aufbewahrungsmodul (4) von mindestens einer Seite des Aufbewahrungsmoduls (4) gewährleistet ist, und dass mindestens ein Verschluss (12) in einer Seitenfläche in eine im Wesentlichen horizontale Auflagefläche (13) umwandelt werden kann.

2. Verstaubares Aufbewahrungsmodul (4) nach Anspruch 1, **dadurch gekennzeichnet, dass** die Reihe von Beifahrersitzen (1, 2, 3) drei individuelle Sitze aufweist, wobei der Vorderabschnitt (5) des Aufbewahrungsmoduls (4) ein Teil eines mittleren Beifahrersitzes (2) bildet.

3. Verstaubares Aufbewahrungsmodul (4) nach Anspruch 1, **dadurch gekennzeichnet, dass** sich die horizontale Auflagefläche (13) in eine laterale Richtung mit Abstand zu sowohl dem Sitzpolster und der Rückenlehne eines benachbarten Beifahrersitzes (1, 3) erstreckt, um einen Tisch zu bilden.

4. Verstaubares Aufbewahrungsmodul (4) nach Anspruch 1, **dadurch gekennzeichnet, dass** das Aufbewahrungsmodul (4) mit mindestens einem Verschluss in der oberen Fläche versehen ist, wodurch Zugang zum Aufbewahrungsmodul (4) von oben gewährleistet ist.

5. Verstaubares Aufbewahrungsmodul (4) nach Anspruch 1, **dadurch gekennzeichnet, dass** das Aufbewahrungsmodul (4) mit einem mittleren Trennungsteil (15) versehen ist, das in eine im Wesentlichen vertikale Richtung ausziehbar ist, wenn das Aufbewahrungsmodul (4) in seiner aktiven Position ist.

6. Verstaubares Aufbewahrungsmodul (4) nach Anspruch 1, **dadurch gekennzeichnet, dass** das Aufbewahrungsmodul (4) einen im Wesentlichen rechteckigen Querschnitt in einer zur Rückenlehne (6) parallelen Ebene aufweist.

7. Verstaubares Aufbewahrungsmodul (4) nach Anspruch 1, **dadurch gekennzeichnet, dass** das Aufbewahrungsmodul (4) einen im Wesentlichen halbkreisförmigen Querschnitt in einer zur Rückenlehne (6) parallelen Ebene (6) aufweist.

8. Verstaubares Aufbewahrungsmodul (4) nach Anspruch 1, **dadurch gekennzeichnet, dass** das Aufbewahrungsmodul (4) in mindestens zwei Position gesperrt werden kann, einschließlich einer vollkommen verstauten Position und einer vollkommen ausgezogenen Position.

9. Verstaubares Aufbewahrungsmodul (4) nach Anspruch 8, **dadurch gekennzeichnet, dass** sich das Aufbewahrungsmodul (4) über im Wesentlichen die ganze Länge des Sitzpolsters (7) erstreckt, wenn es sich in seiner vollkommen ausgezogenen Position befindet.

10. Verstaubares Aufbewahrungsmodul (4) nach Anspruch 8, **dadurch gekennzeichnet, dass** sich das Aufbewahrungsmodul (4) zwischen zwei Sitzen (8, 9), die vor der Reihe von Beifahrersitzen (1, 2, 3) angeordnet sind, erstreckt, wenn es sich in seiner vollkommen ausgezogenen Position befindet.

11. Verstaubares Aufbewahrungsmodul (4) nach Anspruch 1, **dadurch gekennzeichnet, dass** das Aufbewahrungsmodul (4) in seiner verstauten Position in einem Kofferraum angeordnet ist.

12. Verstaubares Aufbewahrungsmodul (4) nach Anspruch 9, **dadurch gekennzeichnet, dass** das Aufbewahrungsmodul (4) in seiner verstauten Position vom Kofferraum zugänglich ist.

## Revendications

1. Module de stockage escamotable (4) pour un véhicule, module de stockage (4) qui présente une section avant (5) comprenant une section d'un dossier (6) de l'un d'une rangée de sièges passagers (1, 2, 3) ayant au moins deux sièges individuels, que le module de stockage (4) est agencé pour pourvoir glisser dans une direction longitudinale du véhicule à partir d'une position escamotée, dans laquelle le module de stockage (4) est situé essentiellement derrière ledit dossier (6), dans au moins une position active, dans laquelle le module de stockage (4) s'étend hors du dossier (6) au moins partiellement sur un coussin de siège (7) adjacent à au moins un siège passager (1, 2, 3), **caractérisé en ce que** le module de stockage (4) est pourvu d'au moins une fermeture (12, 16) sur au moins une surface latérale opposée un siège adjacent (1, 3), permettant l'accès au module de stockage (4) d'au moins un côté dudit module de stockage (4), et qu'au moins une fermeture (12) sur une surface latérale peut se convertir en une surface d'appui (13) essentiellement horizontale.

2. Module de stockage escamotable (4) selon la revendication 1, **caractérisé en ce que** la rangée de sièges passagers (1, 2, 3) présente trois sièges individuels, la section avant (5) du module de stockage (4) formant une partie d'un siège passager central (2).

3. Module de stockage escamotable (4) selon la revendication 1, **caractérisé en ce que** la surface d'appui (13) horizontale s'étend dans une direction latérale espacée à la fois d'un coussin de siège et d'un dossier d'un siège passager adjacent (1, 3) pour former une table.

4. Module de stockage escamotable (4) selon la revendication 1, **caractérisé en ce que** le module de stockage (4) est pourvu d'au moins une fermeture sur sa surface latérale, permettant l'accès au module de stockage (4) du haut.

5. Module de stockage escamotable (4) selon la revendication 1, **caractérisé en ce que** le module de stockage (4) est pourvu d'une cloison de séparation centrale (15) qui peut s'étendre dans une direction essentiellement verticale lorsque ledit module de stockage (4) est dans sa position active.

6. Module de stockage escamotable (4) selon la revendication 1, **caractérisé en ce que** le module de stockage (4) présente une section transversale essentiellement rectangulaire dans un plan parallèle au dossier (6).

7. Module de stockage escamotable (4) selon la revendication 1, **caractérisé en ce que** le module de stockage (4) présente une section transversale essentiellement semi-circulaire dans un plan parallèle au dossier (6).

8. Module de stockage escamotable (4) selon la revendication 1, **caractérisé en ce que** le module de stockage (4) peut être verrouillé dans au moins deux positions, comprenant une position entièrement escamotée et une position entièrement déployée.

9. Module de stockage escamotable (4) selon la revendication 8, **caractérisé en ce que** le module de stockage (4) s'étend essentiellement sur toute la longueur du coussin du siège (7) dans sa position complètement déployée.

10. Module de stockage escamotable (4) selon la revendication 8, **caractérisé en ce que** le module de stockage (4) s'étend entre une paire de sièges (8, 9) situés opposés de la rangée de sièges passagers (1, 2, 3), lorsqu'il est dans sa position complètement déployée.

11. Module de stockage escamotable (4) selon la revendication 1, **caractérisé en ce que** le module de stockage (4) est situé dans un coffre à bagages dans sa position escamotée.

12. Module de stockage escamotable (4) selon la revendication 9, **caractérisé en ce que** le module de stockage (4) est accessible depuis le coffre à bagages lorsqu'il est dans sa position escamotée.
